# FASCICULE DE BREVET EUROPEEN

(11) **EP 2 798 641 B1**
(45) Date de publication et mention de la délivrance du brevet: **10.08.2016**
(21) Numéro de dépôt: 12818518.8
(22) Date de dépôt: 24.12.2012
(51) Int. Cl.: B01F 3/08, B01F 5/04, G21C 13/032, G21C 15/22, G21D 1/02

(54) **CIRCUIT PRIMAIRE DE RÉACTEUR NUCLÉAIRE AVEC UN PIQUAGE ÉQUIPÉ D'UNE MANCHETTE THERMIQUE**
KERNREAKTOR-PRIMÄRKREIS MIT EINER ZWEIGLEITUNG MIT EINER WÄRMESCHUTZHÜLLE
NUCLEAR REACTOR PRIMARY CIRCUIT WITH A BRANCH PIPE EQUIPPED WITH A THERMAL SLEEVE

(30) Priorité: 29.12.2011 FR 1162551
(43) Date de publication de la demande: 05.11.2014
(73) Titulaire: AREVA NP, 92400 Courbevoie (FR)
(72) Inventeur: CARTIER, Olivier, F-78000 Versailles (FR); DUMEZ, Christel, F-91600 Savigny sur Orge (FR); MULLER, Thierry, F-71390 St Helene (FR); BALANCON, Thierry, F-28230 Epernon (FR)
(74) Mandataire: Blot, Philippe Robert Emile
(86) Numéro de dépôt international: PCT/EP2012/076888
(87) Numéro de publication internationale: WO 2013/098282

(56) Documents cités:
- FR-A1- 2 893 755
- US-A- 5 785 361
- US-A- 6 000 731
- US-B1- 6 708 651

## Description

L'invention concerne en général les circuits primaires de réacteur nucléaire, avec des piquages équipés de manchettes thermiques.

Plus précisément, l'invention concerne un circuit primaire de réacteur nucléaire, du type comprenant :
- une tuyauterie primaire, présentant une surface interne délimitant un volume interne dans lequel circule un fluide primaire de refroidissement du réacteur nucléaire ;
- un piquage fixé à la tuyauterie primaire et délimitant un passage intérieur communiquant avec le volume interne de la tuyauterie primaire ;
- une manchette, présentant une première extrémité liée au piquage et une seconde extrémité libre engagée dans le volume interne de la tuyauterie primaire, la seconde extrémité faisant saillie dans le volume interne par rapport à la surface interne sur une longueur non nulle, un espace annulaire étant délimité entre la manchette et le piquage.

Un tel circuit primaire est connu du document FR 2 893 755 A1, qui décrit que l'extrémité libre de la manchette présente un secteur amont qui pénètre plus profondément à l'intérieur de la tuyauterie primaire que le secteur aval. L'amont et l'aval sont entendus ici relativement au sens de circulation normale du fluide primaire. Un tel arrangement permet d'éloigner la zone d'injection du fluide arrivant par le piquage vers le centre de la tuyauterie primaire. Ceci est particulièrement avantageux quand le piquage annexe est prévu pour injecter un fluide à une température différente de celle du fluide primaire, notamment un fluide plus froid. Le piquage et la surface interne de la tuyauterie primaire ne voient alors qu'un fluide à une température proche de celle du fluide primaire, et ne sont pas soumis à des fluctuations importantes de température. La fatigue thermique au niveau du piquage est très fortement atténuée.

Par ailleurs, le fait que le secteur amont de la manchette soit plus pénétrant que le secteur aval permet de limiter fortement les remontées de vortex de fluide chaud primaire dans la manchette. Ceci permet de limiter la fatigue thermique à l'intérieur de la manchette.

Toutefois, le fait que la manchette fasse saillie dans le volume interne de la tuyauterie primaire fait qu'elle est soumise à un effort résultant de l'écoulement du fluide primaire. Elle peut notamment vibrer sous l'effet des variations de l'effort appliqué par l'écoulement de fluide primaire.

Si la manchette se détache du piquage, elle ne remplit plus sa fonction de limitation de la fatigue au niveau du piquage et elle peut être entraînée par le fluide primaire et aller endommager certains internes du circuit primaire.

Dans ce contexte, l'invention vise à proposer un circuit primaire résolvant ce problème.

A cette fin, l'invention porte sur un circuit primaire du type précité, caractérisé en ce que le circuit primaire comprend un dispositif d'imperdabilité de la manchette, le dispositif d'imperdabilité comprenant au moins un premier relief formé sur le piquage, au moins un second relief formé sur la manchette et susceptible de coopérer avec le premier relief pour empêcher la manchette de tomber dans la tuyauterie primaire si la manchette se sépare du piquage.

Ainsi, au cas où la manchette se détache du piquage sous l'effet des sollicitations appliquées par la circulation du fluide primaire, les premiers et seconds reliefs empêchent la manchette de glisser à l'intérieur de la tuyauterie primaire. La manchette reste confinée à l'intérieur du piquage.

Le piquage est typiquement utilisé pour raccorder une tuyauterie annexe, par exemple la tuyauterie de charge du circuit de contrôle volumétrique et chimique (circuit dit « RCV ») au circuit primaire. Cette tuyauterie est piquée sur la branche froide du circuit primaire, c'est-à-dire sur la partie de ce circuit située en amont de la cuve du réacteur nucléaire et reliant la pompe de circulation du fluide primaire à une des entrées de la cuve. La tuyauterie de charge permet d'injecter des charges de liquide venant du RCV dans le circuit primaire, de façon à ajuster à la hausse le volume de liquide primaire circulant dans celui-ci. Les charges de liquide injectées sont plus froides que le liquide primaire circulant dans le circuit primaire.

Le piquage peut également être utilisé pour raccorder à la branche chaude du circuit primaire une tuyauterie annexe provenant du pressuriseur. La branche chaude est la partie du circuit primaire raccordant la cuve du réacteur nucléaire à un générateur de vapeur. Dans certaines situations, un fluide très chaud circule depuis le pressuriseur jusque dans la tuyauterie primaire.

La manchette est par exemple raccordée par sa première extrémité directement au piquage.

En variante, la première extrémité de la manchette est raccordée à la tuyauterie annexe piquée sur la tuyauterie primaire par l'intermédiaire du piquage. Dans ce cas, la tuyauterie annexe délimite un volume intérieur communiquant avec le volume interne de la tuyauterie primaire par l'intermédiaire du passage intérieur du piquage. La manchette traverse entièrement le passage intérieur. L'espace annulaire s'étend dans ce cas sur toute la longueur du passage intérieur et se prolonge dans la tuyauterie annexe jusqu'au point de jonction entre la manchette et la tuyauterie annexe.

Le passage intérieur du piquage est délimité par une surface périphérique. Les premiers reliefs sont typiquement des reliefs faisant saillie par rapport à la surface périphérique du piquage, à l'intérieur de l'espace annulaire.

Les premiers reliefs peuvent présenter toutes sortes de forme. Ce sont par exemple des plots de forme sensiblement parallélépipédique. Les plots pourraient être également cylindriques, à section ovale, etc. Les premiers reliefs peuvent aussi présenter une forme allongée circonférentiellement, autour de l'axe central du passage intérieur, ou parallèlement à cet axe central.

Le second relief fait saillie par rapport à la surface radialement externe de la manchette, à l'intérieur de l'espace annulaire.

Suivant l'axe central du passage intérieur, les seconds reliefs sont décalés à l'opposé de la tuyauterie primaire par rapport aux premiers reliefs. Les premiers et seconds reliefs sont agencés pour que, au cas où la manchette se détacherait du piquage, les seconds reliefs ne puissent pas franchir les premiers reliefs, et ce quelle que soit la position angulaire de la manchette par rapport au piquage autour de l'axe central.

On entend ici par le fait que la seconde extrémité de la manchette soit en saillie dans le volume interne de la tuyauterie primaire sur une longueur non nulle le fait qu'une partie de la manchette soit engagée à l'intérieur du volume interne. Par exemple, la manchette est engagée dans le volume interne sur une longueur correspondant à au moins 25% de son diamètre externe pris au niveau de la seconde extrémité, de préférence sur au moins 50% de ce diamètre.

La manchette peut être du type décrit dans le document FR 2 893 755 A1. Elle peut ainsi comporter une seconde extrémité dont le bord périphérique libre représente au moins un secteur amont pénétrant plus profondément dans le volume interne que le secteur aval. En variante, les secteurs amont et aval du bord libre sont situés à la même profondeur dans le volume interne.

De préférence, le circuit primaire comprend des reliefs agencés pour créer dans l'espace annulaire un chemin de circulation du fluide primaire depuis une zone d'entrée débouchant dans le volume interne jusqu'au fond de l'espace annulaire, puis dudit fond jusqu'à une zone de sortie débouchant dans le volume interne.

Le fond de l'espace annulaire correspond à la zone de l'espace annulaire la plus éloignée de la tuyauterie primaire. Il correspond à la zone dans laquelle la manchette se raccorde au piquage, ou à la tuyauterie annexe piquée sur la tuyauterie primaire par le piquage. Le fond est ainsi délimité, au moins partiellement, par la première extrémité de la manchette.

Ainsi, on crée une circulation forcée du fluide primaire au sein de l'espace annulaire. Ceci permet d'éviter d'avoir des zones de l'espace annulaire dans lesquelles la circulation du fluide primaire est extrêmement réduite voire nulle, ou des « zones mortes » dans lesquelles risquerait de s'accumuler du Bore notamment.. Cette circulation forcée du fluide primaire dans tout l'espace annulaire vise également à éviter que des gaz (oxygène, hydrogène, azote,...) ne se concentrent dans l'espace annulaire et vise à assurer une homogénéité maximale entre le fluide primaire et le fluide circulant dans l'espace annulaire (homogénéité de température et de composition).

De préférence, les reliefs sont agencés pour que le fluide primaire remonte d'abord le long de la manchette jusqu'au fond de l'espace annulaire, puis redescende le long de la manchette jusqu'à la zone de sortie. Le chemin de circulation comporte ainsi un tronçon où le fluide primaire est ascendant, typiquement tourné vers l'amont, et un tronçon où le fluide primaire est descendant, typiquement tourné vers l'aval. L'amont et l'aval sont ici entendus relativement au sens de circulation normale du fluide primaire dans le volume interne de la tuyauterie primaire. Dans le tronçon ascendant, le fluide circule vers le fond de l'espace annulaire, suivant une direction générale sensiblement parallèle à l'axe central du passage intérieur. Dans le tronçon descendant, la circulation se fait en sens inverse. Le fluide primaire balaye ainsi tout l'espace annulaire.

La zone d'entrée et la zone de sortie sont deux zones de l'ouverture annulaire par laquelle l'espace annulaire débouche dans le volume interne de la tuyauterie primaire. La zone d'entrée correspond typiquement à la moitié de l'ouverture annulaire tournée vers l'amont, et la zone de sortie à la moitié de l'ouverture annulaire tournée vers l'aval.

De préférence, aucun des premiers reliefs n'est situé sur un secteur angulaire de la surface périphérique du passage intérieur de largeur angulaire 45°, tourné vers l'amont suivant la direction de circulation. Préférentiellement ce secteur angulaire libre de tout relief est supérieur à 80°.

En d'autres termes, le secteur de la surface périphérique tourné vers l'amont ne porte pas de premiers reliefs. Ces premiers reliefs pourraient freiner la remontée du liquide primaire dans l'espace annulaire.

De préférence, le dispositif d'impertabilité comprend quatre reliefs, disposés à 90° les uns des autres autour de l'axe central du passage interne. Par rapport à un plan contenant l'axe central du passage intérieur et l'axe central de la tuyauterie primaire, pris au droit du piquage, les premiers reliefs sont disposés à 45°.

De préférence, le second relief est une bague s'étendant autour de la manchette.

La bague présente une forme générale annulaire, et fait saillie sur la surface radialement externe de la manchette, dans l'espace annulaire. Elle est typiquement venue de matière avec la manchette. La bague est typiquement continue. Alternativement, elle peut être constituée de plusieurs tronçons disposés circonférentiellement dans le prolongement des uns des autres mais écartés les uns des autres. De préférence, la bague s'étend autour de la manchette sur un secteur angulaire compris entre 240° et 330°, de préférence entre 260° et 310°, et par exemple entre 280° et 300°.

Ainsi, la bague présente un secteur interrompu. Ce secteur interrompu couvre un secteur angulaire compris entre 30° et 120°, de préférence entre 50° et 100°, par exemple entre 60° et 80°.

De manière à faciliter la circulation du fluide primaire le long du chemin de circulation, le secteur interrompu est tourné vers l'aval.

Le secteur interrompu est ainsi situé de préférence dans la zone de sortie du chemin de circulation, facilitant donc la sortie du fluide primaire hors du chemin de circulation. Au contraire, le secteur de la bague se trouvant dans la zone d'entrée n'est pas interrompu, mais il présente un bord arrondi tourné vers l'axe de la tuyauterie primaire pour faciliter la remonté du fluide primaire vers l'espace annulaire.

De préférence, la bague et les premiers reliefs sont situés sensiblement au même niveau suivant l'axe central du passage intérieur.

De préférence, les premiers et seconds reliefs sont situés selon l'axe central à une distance inférieure à 60 mm, et préférentiellement inférieure à 45 mm, de l'ouverture par laquelle le passage intérieur débouche dans le volume interne de la tuyauterie primaire. Ainsi, les premiers et seconds reliefs sont situés au plus près de cette ouverture, dans une zone où la vitesse du fluide primaire est suffisante pour franchir l'obstacle, de manière à favoriser la circulation du fluide primaire au sein de l'espace annulaire.

Avantageusement, la bague comporte, pour chaque premier relief, une encoche ouverte radialement vers une paroi périphérique du passage intérieur, ouverte selon l'axe central du passage intérieur vers la tuyauterie primaire, et fermée selon l'axe central à l'opposé de la tuyauterie primaire, chaque premier relief étant engagé dans l'encoche correspondante sans contact avec la bague.

Cette disposition permet donc d'agencer la bague et les premiers reliefs sensiblement au même niveau selon l'axe central et donc de disposer la bague dans une position la plus proche possible de l'ouverture du passage intérieur du piquage vers la tuyauterie primaire.

De préférence, la bague présente un bord d'attaque arrondi sur sa face tournée vers le volume interne de la tuyauterie primaire et la seconde extrémité libre de la manchette présente une épaisseur plus fine que celle de la manchette dans sa partie située dans l'espace annulaire de façon à former une surface externe de la manchette tronconique au niveau de l'ouverture de l'espace annulaire sur la tuyauterie primaire.

Les transitions d'épaisseur dans le bas de la manchette et le bord d'attaque arrondi de la bague favorisent ainsi une remonté du fluide primaire dans l'espace annulaire.

Typiquement, le circuit primaire comporte au moins deux nervures s'étendant dans l'espace annulaire, sensiblement parallèlement à l'axe central du passage intérieur, lesdites nervures étant disposées de deux côtés opposés de la manchette.

Typiquement, ces deux nervures sont formées sur la surface radialement externe de la manchette. Elles font saillie dans l'espace annulaire. Alternativement, les deux nervures sont formées ou rapportées sur la paroi périphérique du passage intérieur.

Par rapport à la manchette, les nervures sont en saillie sensiblement sur la même hauteur que la bague définissant le second relief.

Les deux nervures s'étendent, parallèlement à l'axe central, à partir de la bague, suivant une direction opposée à la tuyauterie primaire. Typiquement, une première extrémité de chaque nervure est directement raccordée à la bague. L'extrémité opposée s'arrête à distance du fond de l'espace annulaire, c'est-à-dire à distance de la zone où la manchette se raccorde au piquage.

De préférence, les nervures s'étendent sur une hauteur représentant entre 40% et 60% de la hauteur totale de l'espace annulaire, dans une direction parallèle à l'axe central du passage intérieur, entre le fond de l'espace annulaire et la partie de l'espace annulaire qui débouche sur la tuyauterie primaire.

Les deux nervures sont typiquement rectilignes. En variante, elles sont partiellement ou totalement arquées.

Les deux nervures subdivisent donc l'espace annulaire en deux parties circonférentielles, communiquant l'une avec l'autre au fond de l'espace annulaire. La zone d'entrée du chemin de circulation débouche dans l'une des deux parties, et la zone de sortie dans l'autre des deux parties. Ces deux parties correspondent aux tronçons ascendant et descendant du chemin de circulation.

De préférence, les deux nervures sont diamétralement opposées autour de la manchette. Ainsi, les sections de passage respectives des deux tronçons du chemin de circulation sont sensiblement égales l'une à l'autre.

De préférence, les deux nervures s'inscrivent dans un premier plan, formant un angle compris entre 45° et 90° avec un second plan contenant l'axe central du passage interne et l'axe central de la tuyauterie primaire pris au niveau du piquage.

Ceci facilite la dérivation du fluide primaire vers le tronçon ascendant.

Ainsi, quand par exemple l'axe central du passage interne est perpendiculaire à l'axe central de la tuyauterie primaire, les deux nervures sont dans un plan sensiblement perpendiculaire à l'axe central de la tuyauterie primaire. La partie de l'espace annulaire correspondant au tronçon ascendant du chemin de circulation est tournée vers l'amont, et l'autre partie vers l'aval.

Le circuit primaire pourrait comporter plus de deux nervures, par exemple quatre nervures divisant l'espace annulaire en quatre parties circonférentielles. Le tronçon ascendant du chemin de passage correspond alors aux deux parties tournées vers l'amont, le tronçon descendant aux deux parties tournées vers l'aval.

On a décrit ci-dessus que la bague est portée par la manchette, et les plots par le piquage. Toutefois, il est possible d'agencer ces éléments de manière inverse, les plots étant portés par la manchette et la bague par le piquage.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique générale de la partie primaire d'un réacteur nucléaire à eau pressurisée ;
- la figure 2 est une vue en coupe, agrandie, d'un détail Il de la figure 1, montrant l'interface entre la tuyauterie de charge connectée au circuit RCV et la tuyauterie primaire ;
- la figure 3 est une vue en perspective d'une partie de la manchette de la figure 2;
- la figure 4 est une section prise selon les flèches IV de la figure 2 ;
- la figure 5 est une section prise selon les flèches V de la figure 2 ;
- la figure 6 est une section partielle prise selon les flèches VI de la figure 4.

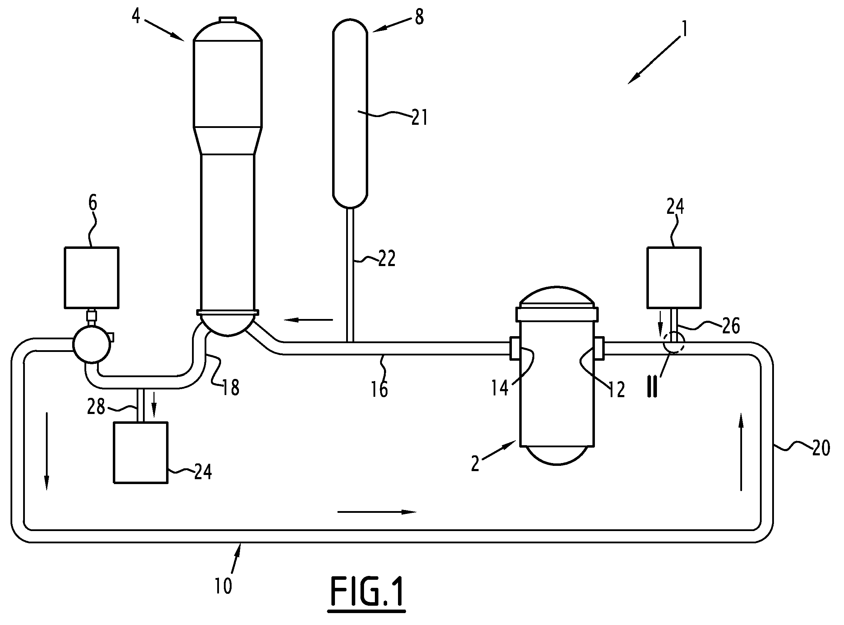

Le réacteur nucléaire 1 représenté partiellement sur la figure 1 comprend une cuve 2 contenant des assemblages de combustible nucléaire, un générateur de vapeur 4, une pompe primaire 6, un pressuriseur 8 et un circuit primaire 10. La cuve 2 est pourvue d'au moins une entrée 12 et une sortie 14. Le circuit primaire 10 comprend une branche chaude 16 reliant la sortie 14 de la cuve 2 au générateur de vapeur 4, une branche en U 18 reliant le générateur de vapeur 4 à la pompe primaire 6, et une branche froide 20 reliant la pompe 6 à l'entrée 12 de la cuve 2.

Le circuit primaire 10 contient un fluide primaire, typiquement de l'eau, circulant en circuit fermé. Le fluide primaire est refoulé par la pompe primaire 6 jusqu'à la cuve 2, traverse cette cuve en s'échauffant au contact des assemblages de combustible nucléaire, puis cède sa chaleur à un fluide secondaire circulant dans un circuit secondaire (non représenté) en passant dans le générateur de vapeur 4.

Le pressuriseur 8 est principalement formé d'une enveloppe chaudronnée étanche 21, en communication avec le volume intérieur de la branche chaude 16 par l'intermédiaire d'une tuyauterie 22 piquée sur cette branche chaude 16. L'enveloppe 21 est partiellement remplie par le fluide primaire, le ciel au sommet de cette enveloppe 21 étant occupé par de la vapeur d'eau sous pression en équilibre hydrostatique avec le fluide primaire. Le pressuriseur 8 comprend par ailleurs des moyens (non représentés) pour faire varier de manière contrôlée la pression de la vapeur d'eau dans le ciel de l'enveloppe 21, de manière à ajuster la pression du fluide primaire dans le circuit 10.

Le réacteur comprend également un circuit 24 de contrôle volumétrique et chimique appelé Réacteur Contrôle Volume (RCV), représenté de manière schématique sur la figure 1. Le circuit RCV est apte à faire varier de manière contrôlée le volume de fluide primaire en circulation dans le circuit 10, en injectant des charges de fluide dans le circuit primaire, ou en soutirant des charges de fluide hors de ce circuit. A cet effet, le circuit primaire 10 comprend une tuyauterie de charge 26 raccordée au circuit RCV 24 et piquée sur la branche froide 20 du circuit primaire 10.

Le circuit primaire 10 comprend également une tuyauterie de soutirage 28 piquée au point bas de la branche en U 18 du circuit primaire 10.

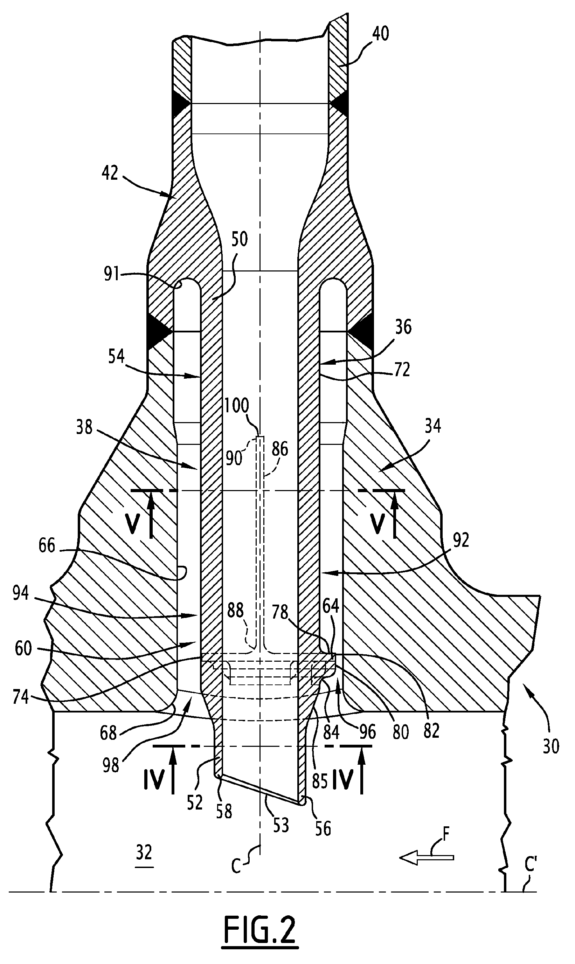

L'interface entre la tuyauterie de charge 26 et la branche froide 20 du circuit primaire est illustrée sur la figure 2. La branche froide 20 comprend une tuyauterie primaire cylindrique 30 délimitant un volume interne 32 dans lequel circule le fluide primaire, ledit fluide circulant de l'amont de la tuyauterie primaire, c'est-à-dire de la pompe 6, vers l'aval de la tuyauterie primaire, c'est-à-dire vers l'entrée 12 de la cuve 2. L'axe central C' de la tuyauterie primaire 30 est horizontal sur la figure 2. Le circuit comprend également un piquage 34 de raccordement de la tuyauterie de charge 26 à la tuyauterie primaire 30, et une manchette interne 36 de protection.

Le piquage 34 est soudé dans un orifice de la tuyauterie 30, et définit intérieurement un passage intérieur 38 se branchant sensiblement perpendiculairement à partir du volume interne 32 de la tuyauterie 30. Le passage 38 est sensiblement cylindrique. Il met en communication le volume intérieur de la tuyauterie de charge 26 avec le volume interne 32 de la tuyauterie primaire 30.

La tuyauterie de charge 26 comprend une partie principale 40 sensiblement cylindrique, de diamètre interne réduit par rapport au diamètre interne du passage 38, et une partie intermédiaire 42 interposée entre la partie principale 40 et le piquage 34.

La partie intermédiaire 42, la partie principale 40 et le passage 38 sont coaxiaux, d'axe central C sensiblement radial par rapport à la tuyauterie primaire 30.

La manchette 36 présente une forme générale cylindrique, d'axe central C. Elle présente une première extrémité 50 solidaire de la face interne de la tuyauterie de charge 26. Plus précisément, cette première extrémité 50 est venue de matière avec une partie interne de la partie intermédiaire 42. La manchette 36 s'étend, de manière sensiblement rectiligne à partir de cette première extrémité 50 jusqu'à une seconde extrémité 52 libre située dans le volume interne 32 de la tuyauterie primaire 30. La manchette 36 s'étend donc à l'intérieur du passage intérieur 38. Elle présente un diamètre extérieur réduit par rapport au passage intérieur 38, de telle sorte qu'un espace annulaire 54 est délimité entre la manchette 36, d'une part, et la partie intermédiaire 42 et le piquage 34, d'autre part. Cet espace 54 est ouvert vers le bas de la figure 2 et débouche dans le volume interne 32 de la tuyauterie primaire 30. Il est fermé vers le haut de la figure 2, par la zone de jonction entre la manchette 36 et la partie 42.

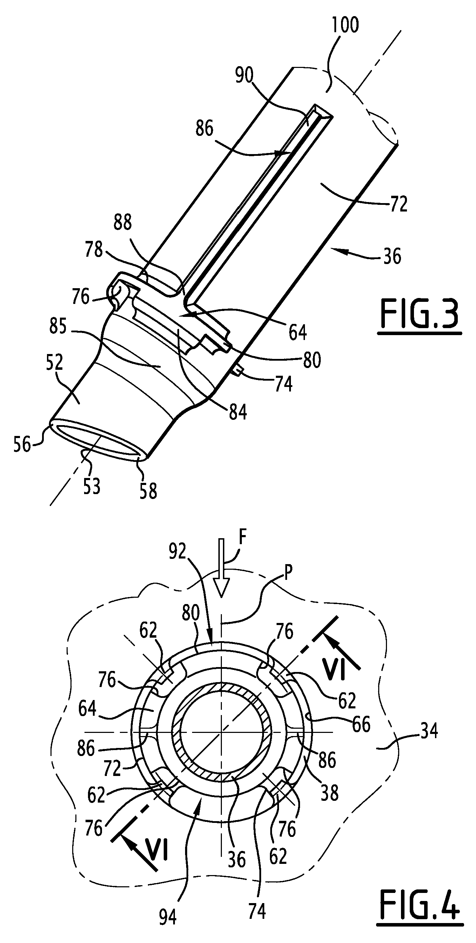

La seconde extrémité 52 de la manchette est délimitée par un bord périphérique libre 53 présentant un profil en biseau. Comme on le voit sur les figures 2 et 3, ce bord périphérique présente des secteurs amont et aval 56 et 58, tournés respectivement vers l'amont et vers l'aval de la tuyauterie primaire 30. Le sens de circulation du fluide primaire est représenté par la flèche F de la figure 2.

Du fait que le bord périphérique 53 est taillé en biseau, le secteur amont 56 du bord périphérique pénètre plus profondément dans le volume intérieur 32 de la tuyauterie primaire que le secteur aval 58.

On appelle ici profondeur de pénétration d'un point du bord périphérique 53, la distance séparant ce point de l'ouverture du passage intérieur 38 débouchant dans le volume interne 32, cette distance étant prise sensiblement radialement par rapport à l'axe central C' de la tuyauterie primaire 30.

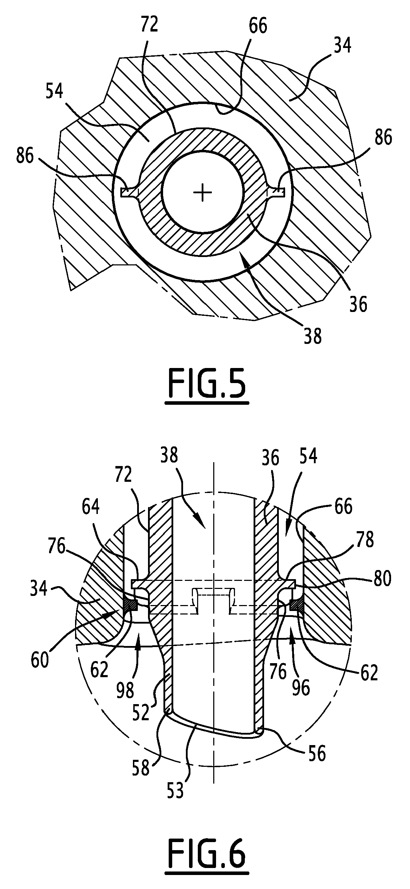

Un dispositif 60 d'imperdabilité de la manchette 36 est prévu pour empêcher la manchette 36 de tomber à l'intérieur de la tuyauterie primaire 30. Le dispositif 60 comporte une pluralité de plots 62 (visibles sur les figures 4 et 6) portés par le piquage 34, et une bague 64, formée sur la manchette 36.

Les plots 62 présentent des formes générales parallélépipédiques. Ils sont rapportés sur une paroi périphérique 66 délimitant le passage intérieur 38. Ils sont répartie à 90° les uns des autres autour de l'axe C. Ils font saillie dans l'espace annulaire 54. Comme le montre notamment la figure 6, les plots 62 sont placés à proximité immédiate de l'ouverture 68 par laquelle le passage intérieur 38 débouche dans le volume interne de la tuyauterie primaire.

Le plan P contenant les axes centraux C et C' est matérialisé sur la figure 4. Les plots 62 sont répartis autour de l'axe C suivant des directions formant des angles de 45° par rapport au plan P, comme le montre la figure 4.

Ainsi, aucun des plots 62 n'est situé sur un secteur angulaire de 80° de la paroi périphérique 66, tourné vers l'amont suivant la direction C'. Ce secteur angulaire s'étend sur 40° de part et d'autre du plan P sur la figure 4.

Comme visible sur la figure 2, la manchette 36 est délimitée radialement vers l'extérieur par une surface 72 sensiblement cylindrique, tournée vers le piquage. L'espace annulaire 54 est délimité entre la surface 72 et la paroi périphérique 66. La bague 64 fait saillie radialement vers l'extérieur de la manchette par rapport à la surface 72. Elle fait saillie vers l'intérieur de l'espace annulaire 54. La bague 64 s'étend dans un plan sensiblement perpendiculaire à l'axe C. Elle a la forme d'un anneau interrompu, présentant un secteur ouvert 74 (voir figure 4). Le secteur ouvert 74 s'étend sur environ 76°, autour de l'axe C. Il est tourné vers l'aval, comme le montre la figure 4. La bague 64 présente radialement une largeur choisie pour que l'interstice entre la bague et la paroi périphérique 66 soit par exemple de 5 mm.

Considérée suivant l'axe C, la bague s'étend sensiblement au même niveau que les plots 62.

Pour permettre de positionner la bague 64 le plus prêt possible de l'ouverture 68 du passage intérieur 38, la bague comporte quatre encoches 76, visibles notamment sur les figures 3, 4 et 6, pour loger les plots 62. Chaque encoche 76 est ouverte radialement vers l'extérieur, c'est-à-dire vers la paroi périphérique 66. Chaque encoche 76 est également ouverte selon l'axe C, vers la tuyauterie primaire 30. En revanche, les encoches 76 sont fermées axialement à l'opposé de la tuyauterie primaire, c'est-à-dire vers la tuyauterie annexe 40.

La hauteur des plots 62 par rapport à la paroi périphérique 66 est telle que l'extrémité libre du plot 62 est engagée à l'intérieur de l'encoche 76 correspondante avec un jeu par rapport à l'encoche de sorte qu'en fonctionnement normal, il n'y ait pas de contact entre les plots 62 et les encoches 76. Au cas où la manchette 36 se détacherait, la bague 64 serait bloquée en translation vers l'intérieur de la tuyauterie primaire par les plots 62 entrant en contact avec les encoches 76.

Comme visible sur la figure 2 et sur la figure 3, la bague 64 est délimitée vers la tuyauterie annexe 40 par une face 78 sensiblement plane. La face 78 est sensiblement perpendiculaire à l'axe C. L'arête 82 assurant la jonction de la face 78 avec la tranche 80 de la bague est à angle vif. Au contraire, la bague 64 est délimitée vers la tuyauterie primaire par une face 84 ayant des formes douces. En particulier, la transition entre la face 84 et la tranche 80 présente une forme arrondie. La manchette 36 comporte également, dans sa partie située juste en dessous de la bague 64 sur la figure 2, une surface externe tronconique 85 qui forme une autre transition douce vers l'extrémité 52 de la manchette. La manchette présente en effet une épaisseur plus fine au niveau de son extrémité 52 que dans sa partie situé à l'intérieur du passage interne 38 formant ainsi une transition conique au niveau de la surface 85 qui se situe en regard de l'ouverture 68 du passage intérieur 38. L'effet de cette forme tronconique et de la forme arrondie entre la face 84 et la tranche 80 est de faciliter la remonté du fluide primaire dans l'espace annulaire.

En effet, même si la section de passage du fluide primaire est plus réduite dans la zone d'entrée 96, le fluide arrive de la tuyauterie primaire 30 avec une vitesse suffisante pour remonter dans l'espace annulaire 54 malgré la restriction de passage au niveau de la bague 64.

Comme visible sur la figure 3, la manchette 36 porte deux nervures 86 sur sa surface externe 72.

Les nervures 86 s'étendent à partir de la bague 64, parallèlement à l'axe C, vers le fond de l'espace annulaire 54. Les nervures 86 sont rectilignes. Elles sont diamétralement opposées par rapport à l'axe C. Elles présentent chacune une première extrémité 88 directement raccordée à la bague 64. Elles présentent chacune une seconde extrémité 90 s'arrêtant à distance du fond 91 de l'espace annulaire 54. Les nervures 86 présentent une épaisseur par rapport à la surface externe 72 sensiblement égale à celle de la bague 64. Ainsi, la tranche de la nervure 86 est séparée de la paroi périphérique 66 par un interstice d'une largeur de 5 mm environ.

Les nervures 86 présentent une hauteur, selon la direction de l'axe C entre la première extrémité 88 et la seconde extrémité 90, qui correspond sensiblement à la moitié de la hauteur totale de l'espace annulaire 54 entre le fond 91 et l'ouverture 68.

Les deux nervures 86 s'inscrivent dans un même plan, contenant l'axe C, ce plan étant sensiblement perpendiculaire à l'axe central C' de la tuyauterie primaire.

Les deux nervures 86 divisent l'espace annulaire 54 en deux parties. Chacune des deux parties s'étend circonférenciellement autour de la moitié de la manchette 38. La première partie 92 est tournée vers l'amont alors que la deuxième partie 94 est tournée vers l'aval. Ensemble, les parties 92 et 94 constituent un chemin de circulation pour le fluide primaire dans l'espace annulaire, depuis une zone d'entrée 96 communiquant avec le volume interne 32 de la tuyauterie primaire jusqu'à une zone de sortie 98 communiquant également avec le volume interne 32. La zone d'entrée 96 correspond à la zone par laquelle la partie 92 débouche dans le volume interne 32. Cette zone d'entrée 96 correspond encore à la zone de l'ouverture annulaire située dans le prolongement de la partie 92.

Comme visible notamment sur la figure 6, deux des plots 62 et une partie de la bague 64 forment une restriction dans la zone d'entrée 96. La section de passage offerte au fluide primaire au niveau de la restriction est réduite, et est inférieure à la section de passage offerte en aval de la restriction dans la partie 92 de l'espace annulaire.

Comme visible par exemple sur la figure 4, la bague 64 s'étend sur toute la largeur circonférentielle de la partie 92.

De manière symétrique, la zone de sortie 98 correspond à la zone par laquelle la partie 94 débouche dans le volume interne 32.

Cette zone 98 est située au niveau de l'extrémité ouverte de l'espace annulaire 54. Cette zone correspond sensiblement à la zone de l'ouverture annulaire qui est située dans le prolongement de la partie 94.

Comme visible notamment sur la figure 4, la section de passage offerte au fluide primaire dans la zone de sortie 98 est plus grande que dans la zone d'entrée 96. En effet, le secteur ouvert 74 est situé dans la zone de sortie 98. Ainsi, la bague 64 ne s'étend pas sur toute la largeur circonférentielle de la partie 94. Elle ne couvre qu'environ deux tiers de cette largeur.

Par ailleurs, les parties 92 et 94 communiquent l'une avec l'autre au fond de l'espace annulaire. Ceci est obtenu du fait que les nervures 86 ne s'étendent pas jusqu'au fond 91. Il existe donc deux ouvertures 100, diamétralement opposées l'une à l'autre, entre les extrémités 90 des nervures et le fond 91. La section de passage offerte au fluide primaire ensemble par les deux ouvertures 100 est supérieure ou égale à la section de passage offerte au fluide primaire au niveau de la restriction de l'entrée 96.

La circulation du fluide primaire va maintenant être détaillée.

Le fluide primaire circule dans le volume interne 32 de la tuyauterie primaire, d'amont en aval. Le sens de circulation est représenté par la flèche F de la figure 2. L'extrémité libre 53 de la manchette pénètre dans le volume interne 32. De ce fait, la zone de mélange entre le fluide froid arrivant par la tuyauterie annexe 40 et le fluide primaire chaud circulant dans la tuyauterie primaire est déportée loin de l'ouverture 68 du piquage.

Une partie du fluide primaire pénètre dans l'espace annulaire 54 par la zone d'entrée 96. La forme tronconique de la surface 85 et la forme arrondie de la face de la bague 64 tournée vers le volume interne 32 de la tuyauterie primaire ainsi que la section de passage entre la tranche 80 de la bague et la paroi périphérique 66 sont prévues pour assurer une circulation continue de la zone d'entrée vers la zone de sortie, de sorte que l'ensemble de l'espace annulaire 54 est parcouru par le fluide primaire.

Après avoir franchi la restriction constituée par les plots et la bague, le fluide primaire remonte dans la partie 92 de l'espace annulaire jusqu'aux ouvertures 100, le long de la manchette 36. Au niveau des ouvertures 100, le fluide primaire s'écoule circonférentiellement autour de la manchette 36, et pénètre dans la partie 94 de l'espace annulaire. Le fluide primaire redescend ensuite le long de la manchette 36 par la partie 94 jusqu'à la zone de sortie 98. La section de passage au niveau de la zone de sortie 98 est suffisante pour ne pas entraver la bonne circulation du fluide primaire. Le fluide primaire rejoint alors le volume interne 32 de la tuyauterie primaire.

## Revendications

1. Circuit primaire de réacteur nucléaire, le circuit primaire (10) comprenant :
- une tuyauterie primaire (30), présentant une surface interne délimitant un volume interne (32) dans lequel circule un fluide primaire de refroidissement du réacteur nucléaire ;
- un piquage (34) fixé à la tuyauterie primaire (30) et délimitant un passage intérieur (38) communiquant avec le volume interne (32) de la tuyauterie primaire (30) ;
- une manchette (36), présentant une première extrémité (50) liée au piquage (34) et une seconde extrémité libre (52) engagée dans le volume interne (32) de la tuyauterie primaire (30), la seconde extrémité (52) faisant saillie dans le volume interne (32) par rapport à la surface interne sur une longueur non nulle, un espace annulaire (54) étant délimité entre la manchette (36) et le piquage (34) ;
**caractérisé en ce que** le circuit primaire (10) comprend un dispositif d'imperdabilité (60) de la manchette (36), le dispositif d'imperdabilité (60) comprenant au moins un premier relief (62) formé sur le piquage (34), et au moins un second relief (64) formé sur la manchette (36) et susceptible de coopérer avec le premier relief (62) pour empêcher la manchette (36) de tomber dans la tuyauterie primaire (30) si la manchette (36) se sépare du piquage (34).

2. Circuit selon la revendication 1, **caractérisé en ce qu'**il comprend des reliefs (86) agencés pour créer dans l'espace annulaire (54) un chemin de circulation du fluide primaire depuis une zone d'entrée (96) débouchant dans le volume interne (32) jusqu'au fond (91) de l'espace annulaire (54) puis du fond (91) jusqu'à une zone de sortie (98) débouchant dans le volume interne (32).

3. Circuit selon l'une quelconque des revendications précédentes, **caractérisé en ce que** le passage intérieur (38) est délimité par une surface périphérique (66), le fluide primaire circulant dans la tuyauterie primaire (30) d'amont en aval suivant une direction de circulation, aucun des premiers reliefs (62) n'étant situé sur un secteur angulaire de la surface périphérique (66) de largeur angulaire 45° tourné vers l'amont suivant la direction de circulation.

4. Circuit selon l'une quelconque des revendications précédentes, **caractérisé en ce que** le second relief (64) est une bague s'étendant autour de la manchette (36).

5. Circuit selon la revendication 4, **caractérisé en ce que** la bague (64) s'étend autour de la manchette (36) sur un secteur angulaire compris entre 240° et 330°.

6. Circuit selon l'une quelconque des revendications 4 à 5, **caractérisé en ce que** le fluide primaire circule dans la tuyauterie primaire (30) d'amont en aval suivant une direction de circulation, la bague (64) présentant un secteur interrompu (74) tourné vers l'aval suivant la direction de circulation.

7. Circuit selon l'une des quelconque des revendications 4 à 6, **caractérisé en ce que** la bague (64) présente un bord d'attaque arrondi sur sa face tournée vers le volume interne (32) de la tuyauterie primaire (30) et la seconde extrémité libre (52) de la manchette (36) présente une épaisseur plus fine que celle de la manchette dans sa partie située dans l'espace annulaire (54) de façon à former une surface externe (85) de la manchette tronconique au niveau de l'ouverture de l'espace annulaire (54) sur la tuyauterie primaire (30).

8. Circuit selon l'une des revendications 4 à 7, **caractérisé en ce que** le passage intérieur (38) présente un axe central (C).

9. Circuit selon la revendication 8, **caractérisé en ce que** la bague (64) et les premiers reliefs (62) sont situés sensiblement au même niveau selon l'axe central (C).

10. Circuit selon la revendication 8 ou 9" **caractérisé en ce que** la bague (64) présente au moins une encoche (76) ouverte radialement vers une paroi périphérique (66) du passage intérieur (38), ouverte selon l'axe central (C) vers la tuyauterie primaire (30), fermée selon l'axe central (C) à l'opposé de la tuyauterie primaire (30), le premier relief (62) étant engagé dans l'encoche (76) sans contact avec la bague (64).

11. Circuit selon l'une quelconque des revendications 1 à 7, **caractérisé en ce que** le passage intérieur (38) présente un axe central (C).

12. Circuit selon l'une quelconque des revendications 8 à 11, **caractérisé en ce que** le passage intérieur (38) débouche par une ouverture (68) dans le volume interne (32) de la tuyauterie primaire (30), les premier et second reliefs (62, 64) étant situés selon l'axe central (C) à une distance inférieure à 60 mm de l'ouverture (68).

13. Circuit selon l'une quelconque des revendications 8 à 12, **caractérisé en ce qu'**il comprend au moins deux nervures (86) s'étendant dans l'espace annulaire (54) sensiblement parallèlement à un axe central (C) du passage intérieur (38), lesdites nervures (86) étant disposés de deux côtés opposés de la manchette (36).

14. Circuit selon la revendication 13, **caractérisé en ce que** les deux nervures (86) sont diamétralement opposées autour de la manchette (36) et s'inscrivent dans un premier plan formant un angle compris entre 45° et 90° avec un second plan contenant l'axe central (C) du passage intérieur (38) et l'axe central (C') de la tuyauterie primaire (30) pris au niveau du piquage (34).

15. Circuit selon l'une des revendications 13 ou 14, **caractérisé en ce que** les nervures (86) s'étendent sur une hauteur représentant entre 40% et 60% de la hauteur totale de l'espace annulaire (54), dans une direction parallèle à l'axe central (C) du passage intérieur, entre le fond (91) de l'espace annulaire et la partie de l'espace annulaire qui débouche sur la tuyauterie primaire (30).

## Patentansprüche

1. Primärkreislauf eines Kernreaktors, wobei der Primärkreislauf (10) aufweist:
- eine Primärrohrleitung (30), welche eine Innenfläche aufweist, die ein Innenvolumen (32) begrenzt, in welchem ein Primärfluid zum Kühlen des Kernreaktors zirkuliert,
- eine Rohrabzweigung (34), welche an der Primärrohrleitung (30) fixiert ist und eine Innenpassage (38) begrenzt, die mit dem Innenvolumen (32) der Primärrohrleitung (30) kommuniziert,
- einen Kragen (36), welcher ein erste Ende (50), das mit der Rohrabzweigung (34) verbunden ist, und ein zweites, freies Ende (52) aufweist, das in das Innenvolumen (32) der Primärrohrleitung (30) eingreift, wobei das zweite Ende (52) mit Bezug auf die Innenfläche in das Innenvolumen (32) mit einer Länge ungleich null vorsteht, wobei zwischen dem Kragen (36) und der Rohrabzweigung (34) ein Ringraum (54) begrenzt ist,
**dadurch gekennzeichnet, dass** der Primärkreislauf (10) ein Nicht-Verlieren-Mittel (60) für den Kragen (36) aufweist, wobei das Nicht-Verlieren-Mittel (60) zumindest ein erstes Relief (62), welches an der Rohrabzweigung (34) geformt ist, und zumindest ein zweites Relief (64) aufweist, welches an dem Kragen (36) geformt ist und geeignet ist, um mit dem ersten Relief (62) zu kooperieren, um zu verhindern, dass der Kragen (36) in die Primärrohrleitung (30) fällt, wenn sich der Kragen (36) von der Rohrabzweigung (34) löst.

2. Kreislauf gemäß Anspruch 1, **dadurch gekennzeichnet, dass** er zusammengesetzte Reliefs (86) aufweist, um im Ringraum (54) einen Zirkulationspfad für das Primärfluid zu schaffen, ausgehend von einer Eintrittszone (96), welche in das Innenvolumen (32) mündet, bis zu einem Grund (91) des Ringraums (54), dann vom Grund (91) bis zu einer Ausgangszone (98), welche in das Innenvolumen (32) mündet.

3. Kreislauf gemäß irgendeinem der vorhergehenden Ansprüche, **dadurch gekennzeichnet, dass** die Innenpassage (38) durch eine Umfangsfläche (66) begrenzt ist, wobei das Primärfluid in der Primärrohrleitung (30) einer Zirkulationsrichtung folgend von stromaufwärts nach stromabwärts zirkuliert, wobei sich keines der ersten Reliefs (62) in einem Winkelbereich der Umfangsfläche (66) mit einer Winkelbreite von 45° befindet, welcher gegen die Zirkulationsrichtung stromaufwärts gewandt ist.

4. Kreislauf gemäß irgendeinem der vorhergehenden Ansprüche, **dadurch gekennzeichnet, dass** das zweite Relief (64) ein Ring ist, der sich um den Kragen (36) herum erstreckt.

5. Kreislauf gemäß Anspruch 4, **dadurch gekennzeichnet, dass** sich der Ring (64) um den Kragen (36) herum in einem Winkelbereich erstreckt, welcher zwischen 240° und 330° liegt.

6. Kreislauf gemäß irgendeinem der Ansprüche 4 bis 5, **dadurch gekennzeichnet, dass** das Primärfluid in der Primärrohrleitung (30) einer Zirkulationsrichtung folgend von stromaufwärts nach stromabwärts zirkuliert, wobei der Ring (64) einen Unterbrechungsbereich (74) aufweist, welcher der Zirkulationsrichtung folgend nach stromabwärts gewandt ist.

7. Kreislauf gemäß irgendeinem der Ansprüche 4 bis 6, **dadurch gekennzeichnet, dass** der Ring (64) einen abgerundeten Vorderrand an seiner Seite aufweist, die dem Innenvolumen (32) der Primärrohrleitung (30) zugewandt ist, und das zweite, freie Ende (52) des Kragens (36) eine Dicke hat, welche dünner ist als die des Kragens an seinem Abschnitt, der sich im Ringraum (54) befindet, derart, um eine externe Fläche (85) des kegelförmigen Kragens auszubilden auf einem Niveau der Öffnung des Ringraums (54) an der Primärrohrleitung (30).

8. Kreislauf gemäß irgendeinem der Ansprüche 4 bis 7, **dadurch gekennzeichnet, dass** die Innenpassage (38) eine Mittelachse (C) aufweist.

9. Kreislauf gemäß Anspruch 8, **dadurch gekennzeichnet, dass** sich der Ring (64) und die ersten Reliefs (62) bezüglich der Mittelachse (C) im Wesentlichen auf demselben Niveau befinden.

10. Kreislauf gemäß Anspruch 8 oder 9, **dadurch gekennzeichnet, dass** der Ring (64) zumindest eine Einkerbung (76) aufweist, welche radial zu einer Umfangswand (66) der Innenpassage (38) offen ist, in Richtung der Mittelachse (C) zur Primärrohrleitung (30) offen ist und in Richtung der Mittelachse (C) entgegengesetzt zur Primärrohrleitung (30) geschlossen ist, wobei das erste Relief (62) mit der Einkerbung (76) im Eingriff steht, ohne mit dem Ring (64) Kontakt zu haben.

11. Kreislauf gemäß irgendeinem der Ansprüche 1 bis 7, **dadurch gekennzeichnet, dass** die Innenpassage (38) eine Mittelachse (C) aufweist.

12. Kreislauf gemäß irgendeinem der Ansprüche 8 bis 11, **dadurch gekennzeichnet, dass** die Innenpassage (38) mit einer Öffnung (68) in das Innenvolumen (32) der Primärrohrleitung (30) mündet, sich das erste und das zweite Relief (62, 64) in Richtung der Mittelachse (C) von der Öffnung (68) mit einer Distanz kleiner 60 mm im Abstand befinden.

13. Kreislauf gemäß irgendeinem der Ansprüche 8 bis 12, **dadurch gekennzeichnet, dass** er zumindest zwei Rippen (86) aufweist, welche sich im Ringraum (54) im Wesentlichen parallel zu einer Mittelachse (C) der Innenpassage (38) erstrecken, wobei die besagten Rippen (86) an zwei entgegengesetzten Seiten des Kragens (36) angeordnet sind.

14. Kreislauf gemäß Anspruch 13, **dadurch gekennzeichnet, dass** die zwei Rippen (86) um den Kragen (36) herum diametral zueinander entgegengesetzt sind und in einer ersten Ebene enthalten sind, welche mit einer zweiten Ebene, die die Mittelachse (C) der Innenpassage (38) und die Mittelachse (C') der Primärrohrleitung (30) auf dem Niveau der Rohrabzweigung (34) enthält, einen Winkel formt, welcher zwischen 45° und 90° liegt.

15. Kreislauf gemäß irgendeinem der Ansprüche 13 oder 14, **dadurch gekennzeichnet, dass** sich die Rippen (86) über eine Höhe, welche zwischen 40% und 60% der Gesamthöhe des Ringraums (54) enthalten ist, in einer Richtung parallel zur Mittelachse (C) der Innenpassage zwischen dem Grund (91) des Ringraums und dem Abschnitt des Ringraums erstrecken, welcher in die Primärrohrleitung (30) einmündet.

## Claims

1. A nuclear reactor primary circuit, the primary circuit (10) comprising:
- a primary tubing (30), having an inner surface delimiting an inner volume (32) in which a primary fluid circulates for cooling the nuclear reactor;
- a branch (34) fastened to the primary tubing (30) and delimiting an inner passage (38) communicating with the inner volume (32) of the primary tubing (30);
- a sleeve (36), having a first end (50) connected to the branch (34) and a second free end (52) engaged in the inner volume (32) of the primary tubing (30), the second end (52) protruding in the inner volume (32) relative to the inner surface over a non-zero length, an annular space (54) being delimited between the sleeve (36) and the branch (34);
**characterized in that** the primary circuit (10) comprises a device (60) making the sleeve (36) unlosable, the unlosability device (60) comprising at least one first raised portion (62) formed on the branch (34), at least one second raised portion (64) formed on the sleeve (36) and capable of cooperating with the first raised portion (62) to prevent the sleeve (36) from falling into the primary tubing (30) if the sleeve (36) separates from the branch (34).

2. The circuit according to claim 1, **characterized in that** it comprises raised portions (86) arranged to create a path in the annular space (54) for circulation of the primary fluid from an inlet area (96) emerging in the inner volume (32) to the bottom (91) of the annular space (54), then from said bottom (91) to an outlet area (98) emerging in the inner volume (32).

3. The circuit according to any one of the preceding claims, **characterized in that** the inner passage (38) is delimited by a peripheral surface (66), the primary fluid circulating in the primary tubing (30) from upstream to downstream in a direction of circulation, none of the first raised portions (62) being situated on an angular sector of the peripheral surface (66) with an angular width of 45° facing an upstream side of the direction of circulation.

4. The circuit according to any one of the preceding claims, **characterized in that** the second raised portion (64) is a ring extending around the sleeve (36).

5. The circuit according to claim 4, **characterized in that** the ring (64) extends around the sleeve (36) over an angular sector comprised between 240° and 330°.

6. The circuit according to any one of claims 4 to 5, **characterized in that** the primary fluid circulates in the primary tubing (30) from upstream to downstream in a direction of circulation, the ring (64) having a broken sector (74) turned in the downstream direction along the direction of circulation.

7. The circuit according to any one of claims 4 to 6, **characterized in that** the ring (64) has a rounded leading edge on its surface turned toward the inner volume (32) of the primary tubing (30) and the second free end (52) of the sleeve (36) has a smaller thickness than that of the sleeve in its portion situated in the annular space (54), so as to form an outer surface (85) of the sleeve that is tapered at the opening of the annular space (54) on the primary tubing (30).

8. The circuit according to any of the claims 4 to 7, **characterized in that** the inner passage (38) has a central axis (C).

9. The circuit according to the claim 8, **characterized in that** the ring (64) and the first raised portions (62) are situated substantially at the same level along the central axis (C).

10. The circuit according to the claim 8 or 9, **characterized in that** the ring (64) has at least one notch (76) radially open toward a peripheral wall (66) of the inner passage (38), open along the central axis (C) toward the primary tubing (30), closed along the central axis (C) opposite the primary tubing (30), the first raised portion (62) being engaged in the notch (76) without contact with the ring (64).

11. The circuit according to anyone of the claims 1 to 7, **characterized in that** the inner passage (38) has a central axis (C).

12. The circuit according to any one of the claims 8 to 11, **characterized in that** the inner passage (38) emerges through an opening (68) in the inner volume (32) of the primary tubing (30), the first and second raised portions (62, 64) being situated along the central axis (C) at a distance of less than 60 mm from the opening (68).

13. The circuit according to any one of the claims 8 to 12, **characterized in that** it comprises at least two ribs (86) extending the annular space (54), substantially parallel to a central axis (C) of the inner passage (38), said ribs (86) being positioned on two opposite sides of the sleeve (36).

14. The circuit according to claim 13, **characterized in that** the two ribs (86) are diametrically opposite around the sleeve (36) and fit into a first plane, forming an angle comprised between 45° and 90° with a second plane containing the central axis (C) of the inner passage (38) and the central axis (C') of the primary tubing (30) considered at the branch (34).

15. The circuit according to one of claims 13 or 14, **characterized in that** the ribs (86) extend over a height representing between 40% and 60% of the total height of the annular space (54), in a direction parallel to the central axis (C) of the inner passage, between the bottom (91) of the annular space and the portion of the annular space that emerges on the primary tubing (30).
